# EUROPEAN PATENT SPECIFICATION

(11) **EP 2 459 909 B1**
(45) Date of publication and mention of the grant of the patent: **19.06.2013**
(21) Application number: 10748121.0
(22) Date of filing: 30.07.2010
(51) Int. Cl.: F16K 11/07

(54) **FLUID DELIVERY SYSTEM**
FLUIDZUFUHRSYSTEM
SYSTÈME DE DISTRIBUTION DE FLUIDE

(30) Priority: 01.08.2009 GB 0913462
(43) Date of publication of application: 06.06.2012
(73) Proprietor: Kohler Mira Ltd, Cheltenham Gloucestershire GL52 5EP (GB)
(72) Inventor: LEA, Benjamin, Redditch Worcestershire B97 5WG (GB); SANSUM, Nigel Paul, Quedgeley Gloucestershire GL23 NJ (GB)
(74) Representative: Wightman, David Alexander
(86) International application number: PCT/GB2010/051262
(87) International publication number: WO 2011/015853

(56) References cited:
- EP-A2- 0 289 770
- WO-A1-01/90615
- GB-A- 2 237 358
- US-A- 6 135 154

## Description

This invention concerns improvements in or relating to ablutionary installations for washing, showering and bathing. More especially, the invention relates to a water delivery system for supplying water to any one or more of a plurality of outlets according to user selection.

Diverter valves are known for directing a supply of temperature controlled water from a mixer valve to a bath filler or a shower head. The known diverter valves are usually manually operable by a push button or lever to actuate the valve to switch the flow of water to a selected outlet. A diverter valve of this type is disclosed in WO01/90615A.

A water faucet provided with a filter and a control valve for regulating the flow of water to an outlet whereby water can be delivered to the outlet with or without passing through the filter is disclosed in US-A-6135154.

A flow control valve having an internal actuator operated by a drive rod for controlling fluid flow from an inlet to an outlet is disclosed in EP-A-0289770.

Another flow control valve having an internal control sleeve biased by a spring to prevent fluid flow from an inlet to an outlet and movable by fluid pressure to overcome the spring biasing to connect the inlet and outlet is disclosed in GB-A-2237358.

The present invention seeks to provide an improved fluid delivery system.

It is a preferred object of the invention to provide a fluid delivery system which permits fluid flow to be selectively diverted to one or more outlets separately or in combination.

It is another preferred object of the invention to provide a fluid delivery system which can be retro-fitted to an existing flow-line to provide one or more additional outlets for increased functionality.

According to one aspect of the present invention there is provided an ablutionary installation for washing, showering and bathing as defined in claim 1. Preferred features are the subject of dependent claims 2 to 13.

The first and second members may comprise tubular members such as pipes, preferably inner and outer tubular members where one tubular member may be fixed and the other tubular member is movable relative to the fixed tubular member in the axial direction. The tubular members may be arranged concentrically. The inner tubular member may be fixed and the outer tubular member movable or vice versa. The inlet may be provided by the fixed tubular member. The outlets may be provided by the fixed tubular member. Alternatively, the outlets may be provided by the movable tubular member. Alternatively, at least one outlet may be provided by the fixed tubular member and at least one outlet may be provided by the movable tubular member.

In a preferred arrangement, the inlet and at least one outlet are provided by the fixed tubular member, preferably at the ends thereof. In this way, the system may be built into a flow-line by connecting the flow-line to the inlet and outlet at opposite ends of the fixed tubular member. The system may be retrofitted to an existing installation having a flow-line that delivers fluid to an existing outlet such as a shower head, bath or washbasin thereby providing one or more additional outlets supplied from an existing fluid source and providing increased functionality by user selection of one or more outlets. Alternatively, the system may be incorporated into a new installation.

In a preferred arrangement, the inner tubular member is fixed and the outer tubular member is slidably mounted on the inner tubular member and defines therewith a series of annular flow channels selectively connectable to the inlet and to one or more outlets according to the relative axial position of the inner and outer tubular members for diverting fluid flow from the inlet to a selected outlet(s). The flow channels may divert fluid flow from the inlet to the outlets individually or in combination.

The inner tubular member may communicate with the flow channels by any suitable means, for example one or more holes, slots or the like may be provided in the wall of the inner tubular member for fluid to flow from the inlet to a flow channel aligned with the hole(s).

There may be a flow channel that isolates the inlet from the outlets so that flow can be shut-off. There may be a flow channel that connects the inlet to an outlet associated with the outer tubular member. There may be a flow channel that connects the inlet to an outlet associated with the inner tubular member. There may be a flow channel that connects the inlet to more than one outlet associated with one or both tubular members at the same time.

Where an outlet provided by the outer tubular member communicates with a flow channel, fluid can flow from the inlet to the outlet when the flow channel is aligned with the hole(s) in the inner tubular member.

Where an outlet provided by the inner tubular member communicates with a flow channel, fluid can flow from the inlet to the outlet when the flow channel is aligned with the hole(s) in the inner tubular member.

Where two or more outlets communicate with a flow channel, fluid can flow from the inlet to the outlets when the flow channel is aligned with the hole(s) in the inner tubular member.

The inlet may be connectable to a source of temperature controlled water such as a mixer valve or an instantaneous water heater for delivery to one or more of a shower, bath, washbasin connectable to an outlet.

According to another aspect of the invention, there is provided a flow diverter device as defined in claim 14.

The inner member may be fixed and the outer member slidable relative thereto for connecting the inlet to the selected outlet(s). The members may be arranged concentrically. The members may define at least two flow channels therebetween. The inlet may be connectable to at least one outlet via a flow channel. Relative axial sliding movement of the members may change the flow channel and/or the outlet(s) connected to the flow channel to change the fluid flow through the device.

In one preferred embodiment, the inlet is associated with one of the members, preferably the fixed member, and at least one outlet is associated with the other member. At least one outlet may also be associated with the member associated with the inlet.

Where an inlet or outlet is associated with the movable member, it will be configured to accommodate such movement. For example a flexible or telescopic connection may be employed to accommodate axial sliding movement. Alternatively, axial sliding movement may simply re-position an outlet fitting such as a spray head without requiring any special fluid connection.

In another preferred embodiment, the inlet and outlets are associated with one of the members, preferably the fixed member. With this arrangement, fluid connections of the movable member can be avoided.

According to another aspect of the invention, there is provided a method of adding one or more outlets to an ablutionary installation for washing, showering and bathing as defined in claim 15.

The method may include connecting the inlet of the device to the flowline from the fluid source and connecting an outlet of the device to the flowline to the outlet of the installation.

The method may include connecting the device where a user can grasp and move the movable member to select the outlet or outlets to be connected to the fluid source.

Embodiments of the invention will now be described in more detail by way of example only with reference to the accompanying drawings in which:
**Figure 1** is a cut-away perspective view of a water diverter system according to a first embodiment of the invention with the diverter arranged in a flow-off position;
Figure 2 is an enlarged detail view of the area A in Figure 1;
Figure 3 is a cut-away perspective view of the water diverter system of Figure 1 with the diverter arranged in a first flow-on position;
Figure 4 is an enlarged detail of the area B in Figure 3;
Figure **5** is a cut-away perspective view of the water diverter system of Figure 1 with the diverter arranged in a second flow-on position;
Figure 6 is an enlarged detail view of the area C in Figure 5;
Figure 7 is a cut-away perspective view of the water diverter system of Figure 1 with the diverter arranged in a third flow-on position;
Figure 8 is an enlarged detail view of the area D in Figure 7;
Figure 9 is a cut-away perspective view of the water diverter system of Figure 1 with the diverter arranged in a fourth flow-on position;
Figure 10 is an enlarged detail view of the area E in Figure 9;
Figure 11 is a cut-away perspective view of the water diverter system of Figure 1 with the diverter arranged in a fifth flow-on position;
Figure 12 is an enlarged detail view of the area F in Figure 11;
**Figure 13** is a cut-away perspective view of a water diverter system according to a second embodiment of the invention with the diverter arranged in a first flow-on position;
**Figure 14** is an enlarged detail view of the area G in Figure 13;
**Figure 15** is a cut-away perspective view of the water diverter system of Figure 13 with the diverter arranged in a second flow-on position;
**Figure 16** is an enlarged detail view of the area H in Figure 15;
**Figure 17** is a cut-away perspective view of the water diverter system of Figure 13 with the diverter arranged in a third flow-on position; and
**Figure 18** is an enlarged detail view of the area I in Figure 17.

The following description highlights features of the present invention by describing preferred embodiments. This description is not intended to be limiting in any way, and various features and characteristics may be modified or changed while continuing to be within the scope of the present invention.

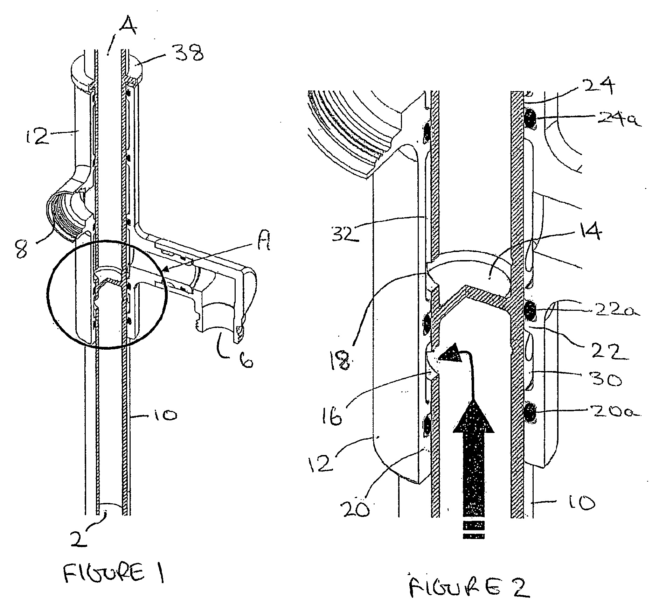

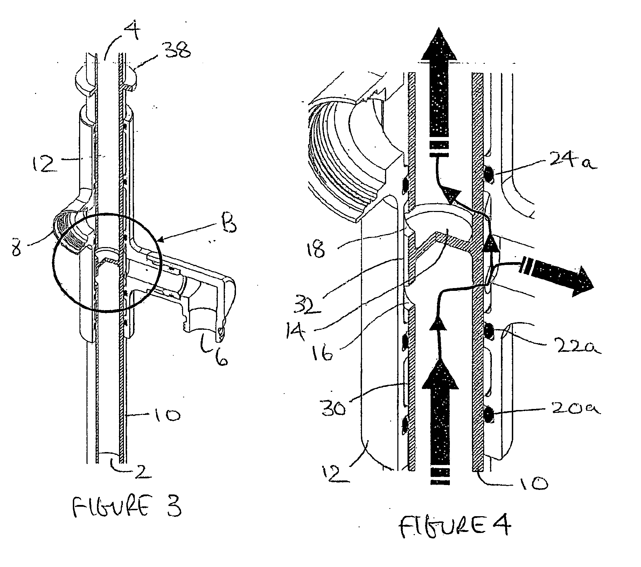

Referring first to Figures 1 to 12 of the drawings, there is shown a first embodiment of a water diverter system for a water supply according to the invention. The water diverter system has a water inlet 2 and three water outlets 4,6,8. The system may be employed in an ablutionary installation for directing water from a source connected to the inlet 2 to none of the outlets 4,6,8 (Figures 1 and 2) or one or more of the outlets 4,6,8 (Figures 3 to 12) according to user selection.

By way of example, the inlet 2 may be connected to a source of temperature controlled water such as a mixer valve or an instantaneous water heater and the outlets 4,6,8 may supply temperature controlled water to an overhead shower, a body shower and a shower handset.. It will be understood the invention is not intended to be limited to such arrangement and that other arrangements are envisaged and within the scope of the invention. For example an outlet may be connected to a bath filler.

The system includes two pipes 10,12 that are axially slidable relative to one another to control the flow of water from the inlet 2 to the selected outlet(s) 4,6,8. It will be understood that the term "pipe" is used for convenience to refer to a member through which fluid can flow and is not intended to be limiting.

The pipes 10,12 are preferably arranged one inside the other, i.e. a tube-in-tube arrangement, and are preferably arranged concentrically. The pipes are preferably cylindrical but other shapes are possible. In this embodiment, the inner one of the pipes 10 is fixed and the outer pipe 12 is slidable along the inner pipe 10. This is not essential however and the outer pipe 12 may be fixed and the inner pipe 10 slidable within the outer pipe 12. It will be understood that the terms "inner" and "outer" are used for convenience to refer to the relative arrangement of the pipes and is not intended to be limiting.

In this embodiment, the inlet 2 and outlet 4 are provided by the inner pipe 10, and the other two outlets 6, 8 are provided by the outer pipe 12. This is not essential however and other arrangements of the inlet 2 and outlets 4,6,8 may be employed.

A transverse partition wall 14 separates the inlet 2 from the outlet 4 and the inner pipe 10 is provided with two annular arrays of through holes 16,18 in the pipe wall either side of the partition wall 14. The holes 16 form an inlet array communicating with the inlet 2 and the holes 18 form an outlet array communicating with the outlet 4. Each array consists of a plurality of holes, in this case, two, although more than two may be employed. In some applications one or both arrays may be replaced by a single hole. It will be understood that the term "hole" is used for convenience to refer to any opening in the pipe wall and is not intended to be limiting.

The outer pipe 12 is provided with five internal ribs or lands 20,22,24,26,28 in which O-ring seals 20a,22a,24a,26a,28a are mounted. The O-ring seals 20a,22a,24a,26a,28a are axially spaced apart and provide a fluid-tight seal with the outer surface of the inner pipe 10 to separate an annular clearance gap between the pipes 10,12 into four annular flow channels 30,32,34,36. As shown the outlet 6 communicates with the flow channel 32 and the outlet 8 communicates with the flow channel 34.

In use, the outer pipe 12 is axially slidable along the inner pipe 10 to select the flow channel(s) 30,32,34,36 communicating with the inlet and outlet arrays of holes 16,18 and thus control the flow of water from the inlet 2 to the selected outlet(s) 4,6,8 individually or in combination.

Figures 1 and 2 show the diverter system in a flow-off position in which the inlet 2 communicates with the flow channel 30 via the array of holes 16 in the wall of the inner pipe 10. In this position, the outlets 4,6,8 are isolated from the flow channel 30 and flow of water from the inlet 2 to the outlets 4,6,8 is prevented.

The outer pipe 12 is axially located relative to the inner pipe 10 in the flow-off position by engagement with an abutment 38 on the inner pipe 10. In this embodiment the abutment 38 is provided by an annular collar or flange but it will be understood that other means of axially locating the outer pipe 12 may be employed.

Axial movement of the outer pipe 12 away from the abutment 38 brings the inlet 2 into communication with the flow channels 32,34,36 in turn.

Figures 3 and 4 show a first flow-on position in which both arrays of holes 16,18 open to the flow channel 32 so that the inlet 2 communicates with the outlet 6 and also with the outlet 4.

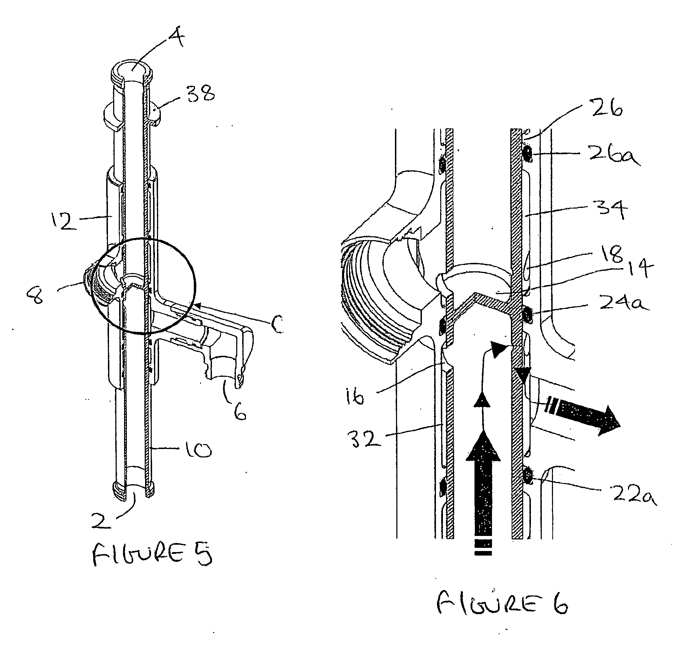

Figures 5 and 6 show a second flow-on position in which the array of holes 16 opens to the flow channel 32 and the array of holes 18 is isolated from the flow channel 32 so that the inlet 2 communicates with the outlet 6 only.

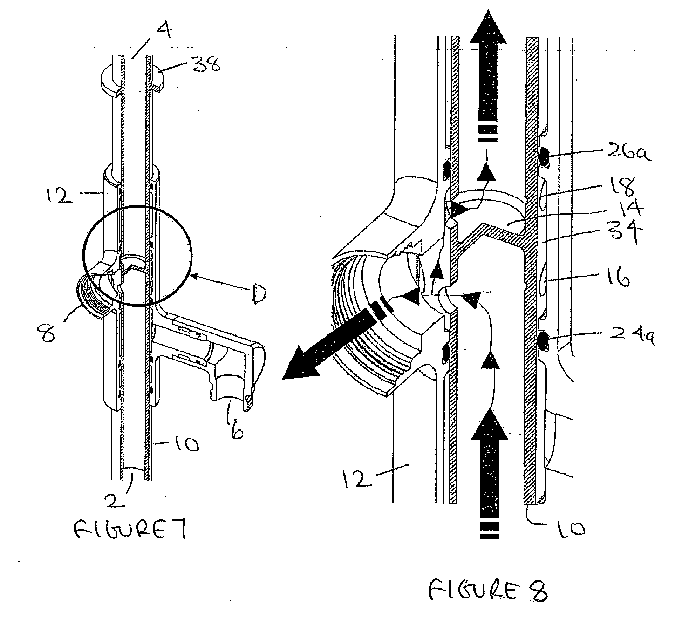

Figures 7 and 8 show a third flow-on position which both arrays of holes 16,18 open to the flow channel 34 so that the inlet 2 communicates with the outlet 8 and also with the outlet 4.

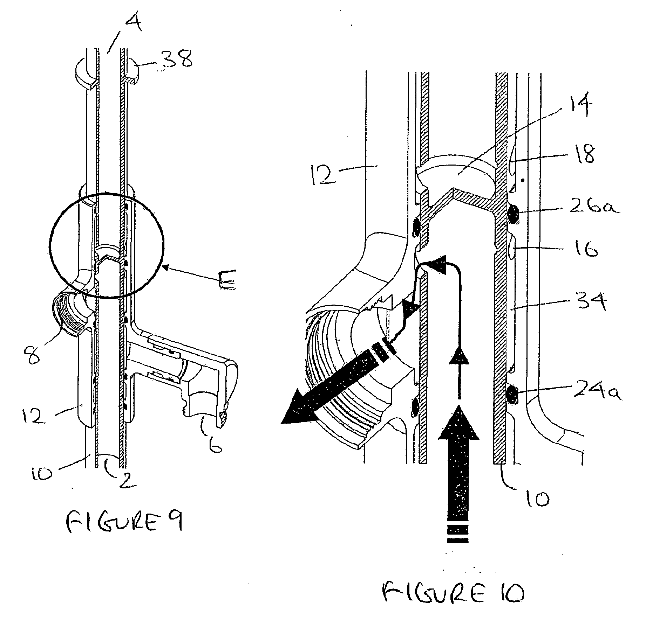

Figures 9 and 10 shown a fourth flow-on position in which the array of holes 16 opens to the flow channel 34 and the array of holes 18 is isolated from the flow channel 34 so that the inlet 2 communicates with the outlet 8 only.

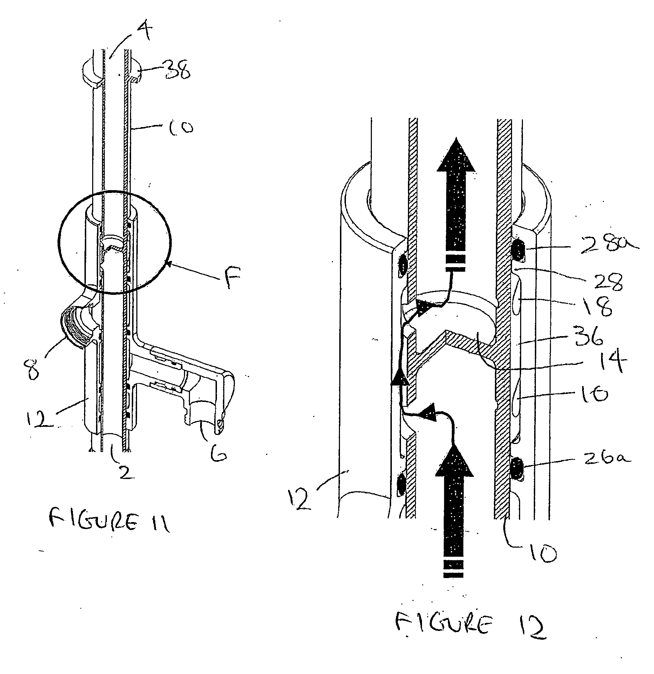

Figures 11 and 12 show a fifth flow-on position in which both arrays of holes 16,18 open to the flow channel 36 so that the inlet 2 communicates with the outlet 4 only.

The outer pipe 12 may be movable beyond the position shown in Figures 11 and 12 to a second flow-off position (not shown) in which the array of holes 16 communicates with the flow channel 36 and the array of holes 18 is isolated from the flow channel 36 so that flow of water from the inlet 2 to the outlets 4,6,8 is again prevented.

In the above-described embodiment, the position of the outlets 6,8 associated with the outer pipe 12 changes with axial movement of the outer pipe 12 relative to the inner pipe 10 to select the outlet(s) 4,6,8 connected to the inlet 2 and the outlets 6,8 are configured to accommodate such movement.

By way of example, a flexible hose (not shown) may be connected to the outlet 6 for delivering fluid to a spray head or handset for a shower, and a spout (not shown) may be connected to the outlet 8 for delivering fluid to a bath or washbasin. Other arrangements to accommodate change in position of the outlets 6,8 will be apparent to those skilled in the art.

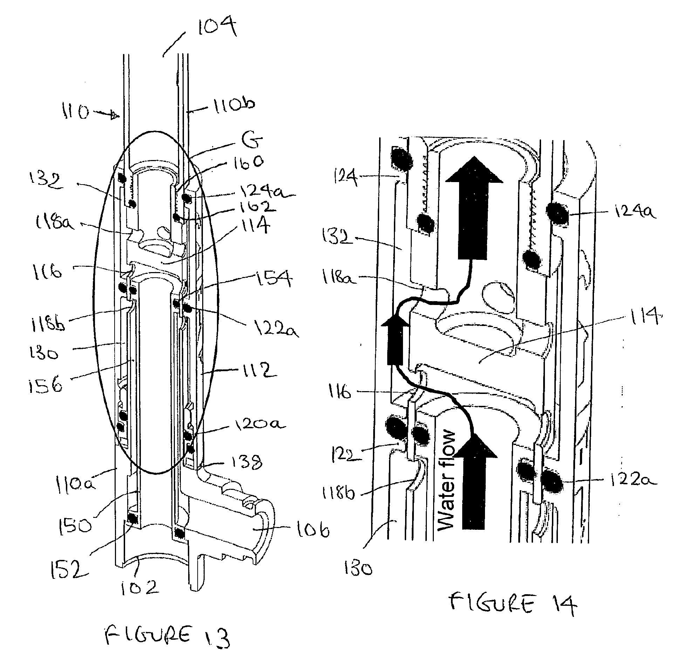

Referring now to Figures 13 to 18 of the drawings, there is shown a second embodiment of a water diverter system for a water supply according to the invention in which like reference numerals in the series 100 are used to indicate parts the same or similar to the previous embodiment.

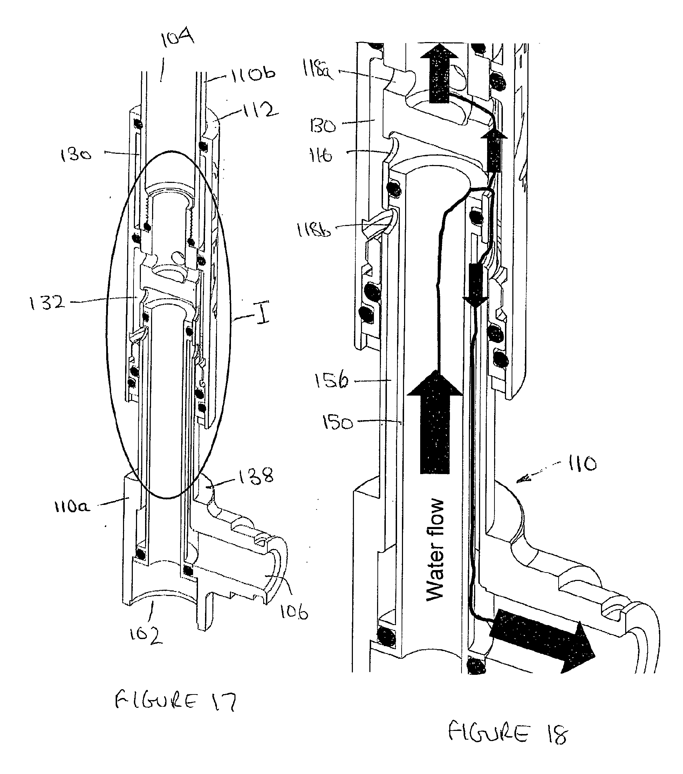

In this embodiment, the water diverter system has a water inlet 102 and two water outlets 104,106. The system may be employed in an ablutionary installation for directing water from the inlet 102 to the outlets 104,106 separately (Figures 13,14,15,16) or in combination (Figures 17,18) according to user selection.

By way of example, the inlet 102 may be connected to a source of temperature controlled water such as a mixer valve or an instantaneous water heater and the outlets 104,106 may supply temperature controlled water to an overhead shower and a shower handset or a bath filler. It will be understood the invention this is not intended to be limited to such arrangement and that other arrangements are envisaged and within the scope of the invention.

The system includes two pipes 110,112 axially slidable relative to one another to control the flow of water from the inlet 102 to the selected outlet(s) 104,106. The pipes 110,112 are preferably arranged concentrically. In this embodiment, the inner one of the pipes 110 is fixed and the outer pipe 112 is slidable along the inner pipe 110. This may not be essential however and the outer pipe 112 may be fixed and the inner pipe 110 slidable within the outer pipe 112.

A transverse partition wall 114 within the inner pipe 110 separates the inlet 102 from the outlet 104 and a sleeve 150 received within the inner pipe 110 on one side of the partition wall 114 separates the inlet 102 from the outlet 106. A pair of O-ring seals 152,154 provide a fluid tight seal between the sleeve 150 and the inner pipe 110.

The inner pipe 110 is provided with three annular arrays of through holes 116,118a,118b in the pipe wall. Each array consists of a plurality of holes, in this case, two, although more than two may be employed. In some applications one or both arrays may be replaced by a single hole. The holes 116 form an inlet array and the holes 118a,118b form outlet arrays on opposite sides of the inlet array. The holes 116,118b are arranged on one side of the partition wall 114 and the holes 118a are arranged on the other side of the partition wall 114.

The holes 116 communicate with the inlet 102 via the sleeve 150. The holes 118a communicate with the outlet 104 and the holes 118b communicate with the outlet 106 via a flow channel 156 defined between the inner pipe 110 and the sleeve 150.

The outer pipe 112 is provided with three internal ribs or lands 120,122,124 in which O-ring seals 120a,122a,124a are mounted. The lower land 120 as viewed in the drawings is provided by an annular insert 158 received within the end of the outer pipe 112.

The O-ring seals 120a,122a,124a are axially spaced apart and provide a fluid-tight seal with the outer surface of the inner pipe 110 to separate an annular clearance gap between the pipes 110,112 into two annular flow channels 130,132.

In use, the outer pipe 112 is axially slidable along the inner pipe 110 to select the flow channel 130,132 communicating with the inlet and outlet arrays of holes 116,118a,118b and thus control the flow of water from the inlet 102 to the selected outlet(s) 104,106 individually or in combination.

Figures 13 and 14 show the diverter system in a first position in which the array of holes 116,118a open to the flow channel 132 and the array of holes 118b opens to the flow channel 130. As a result, water flows from the inlet 102 to the outlet 104 and the outlet 106 is isolated from the inlet 102.

This corresponds to an end position in which the outer pipe 112 is axially located against an abutment 138 of the inner pipe 110. In this embodiment the abutment 138 is provided by an annular shoulder but any suitable abutment means may be employed.

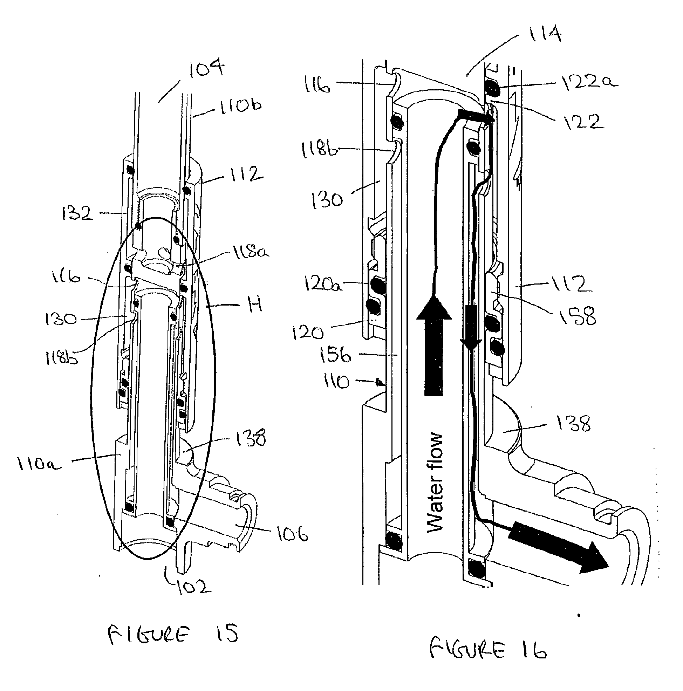

Figures 15 and 16 show the diverter system in a second position in which the outer pipe 112 is moved away from the abutment 138 so that the array of holes 116,118b open to the flow channel 130 and the array of holes 118a open to the flow channel 132. As a result, water now flows from the inlet 102 to the outlet 106 and the outlet 104 is isolated from the inlet 102.

Figures 17 and 18 show the diverter system in a third position in which the outer pipe is 112 is moved further away from the abutment 138 so that all three arrays of holes 116,118a,118b open to the flow channel 130. As a result, water now flows from the inlet 102 to both outlets 104,106.

The outer pipe 112 may be movable beyond the position shown in Figures 17 and 18 to a fourth position (not shown) so that the array of holes 116,118a open to the flow channel 132 and the array of holes 118b is isolated from the flow channel 132 so that water flows from the inlet 102 to the outlet 104 again.

It will be understood that the outer pipe 112 may be movable to a fifth position (not shown) in which the outlets 104,106 are isolated from the inlet 102 to prevent fluid flow.

In the above-described embodiment, the inlet 102 and both outlets 104,106 are associated with the fixed inner pipe 110 and do not move. As a result, axial sliding movement of the outer pipe 112 to selectively connect the inlet 102 to the outlets 104,106 individually or in combination does not change the positions of the inlet 102 and outlets 104,106. This arrangement allows greater freedom in the fluid connections that can be made to inlet 102 and/or outlets 104,106. In other arrangements, one or more of the fluid connections may be movable.

Also in the above-described embodiment, the inner pipe 110 comprises two parts 110a,110b that are secured together by engagement of mating screw threads 160 and sealed by an O-ring 162 above the partition 114. The 102 and outlet 106 are provided by the first part 110a and the outlet 104 is provided by the second part 110b. Other configurations of the inner pipe and/or the inlet and/or outlets are possible.

As will be appreciated from the description of exemplary embodiments, the invented diverter system enables fluid from a single supply to be diverted to two or more outlets separately or in combination.

It will be understood that the description of the exemplary embodiments is not intended to be limiting, and the features of the embodiments may be modified to suit a particular application. For example, while the embodiments show the inlet connected to the inner pipe and the outlets connected to the inner pipe and/or outer pipe, it will be appreciated that the inlet and outlet connections may be changed from those shown to suit requirements for a particular installation.

The diverter system may be configured so that water flow can be shut-off as described. This may be desirable where a separate on/off flow control is not provided in some other part of the installation. However, this is not essential and may be dispensed with where a separate on/off flow control is provided elsewhere. For example a mixer valve may be employed with an on-off flow control function or a separate on-off valve may be provided upstream of the diverter system.

The diverter system has application to both new and existing water supply installations. For example an existing water supply system having a single outlet supplied by a mixer valve or other suitable water source may be converted to a multiple outlet system by inserting the diverter system between the water source and the existing outlet, preferably where it is accessible for operation by a user.

In the above-described embodiments, this may be achieved by breaking into the existing water supply line and connecting the water supply line to the inner pipe so that the outer pipe can slide along the inner pipe to supply water to selected outlet(s) as described above. Other arrangements for adapting an existing installation are possible and within the scope of the invention.

The diverter system may be employed with the pipes arranged vertically as shown in the drawings or horizontally or at any angle between horizontal and vertical.

The concentric arrangement of the pipes may allow relative rotational movement between the pipes as well as relative axial position. Relative rotational movement may be employed to change the direction in which water is discharged from an outlet. Relative rotational movement may be permitted in any axially adjusted position. Relative rotational movement may be employed to control flow rate and may provide an on-off function.

In the preferred embodiments above-described the diverter system is configured with an inlet connected to a supply and two or more outlets. However, the diverter system could be configured with two or more inlets connected to the same or different supplies and one or more outlets. Any number of fluid connection points may be provided to serve as inlets or outlets to suit the requirements of a particular installation.

Those skilled in the art will further appreciate that the present invention may be embodied in other specific forms without departing from the spirit or central attributes thereof as defined in the claims. In that the foregoing description of the present invention discloses only exemplary embodiments thereof, it is to be understood that other variations are contemplated as being within the scope of the present invention as defined in the claims.

## Claims

1. An ablutionary installation for washing, showering and bathing, the installation having a fluid delivery system with an inlet (2;102) and at least two outlets (4,6,8;104,106), and diverter means (10,12;110,112) for controlling fluid flow between the inlet (2;102) and the outlets (4,6,8;104,106), the diverter means including an inner tubular member (10;110) and an outer tubular member (12;112), that are movable relative to each other in an axial direction to connect the inlet (2;102) to a selected outlet (4,6,8;104,106) **characterised in that** the outer tubular member (12;112) defines with the inner tubular member (10;110) a series of fluid flow channels (30,32,34,36;130,132) for selectively communicating with the inlet (2;102) according to the relative axial positions of the inner and outer tubular members (10,12;110,112) to divert fluid flow from the inlet (2;102) to an individual fluid outlet (4,6,8;104,106) or a combination of at least two fluid outlets (4,6,8;104,106) via a selected fluid flow channel (30,32,34,36;130,132).

2. The installation according to claim 1 wherein the tubular members (10,12;110,112) are arranged concentrically.

3. The installation according to claim 1 or claim 2 wherein the inner tubular member (10;110) is fixed and the outer tubular member (12;112) is movable relative to the fixed tubular member (10;110) in the axial direction.

4. The installation according to any preceding claim wherein the inlet (2;102) is provided by the inner tubular member (10;110).

5. The installation according to claim 4 wherein at least one outlet (4) is provided by the inner tubular member (10) and at least one further outlet (6,8) is provided by the outer tubular member (12).

6. The installation according to claim 4 wherein all the outlets (104,106) are provided by the inner tubular member (110).

7. The installation according to any preceding claim wherein one or more holes (16,18;116,118a,118b) is provided in the wall of the inner tubular member (10;110) for fluid to flow from the inlet (2;102) to a flow channel (30,32,34,36;130,1320 aligned with the hole(s) (16,18;116,118a,118b).

8. The installation according to any preceding claim wherein at least one flow channel (30,36) isolates the inlet (2) from all the outlets (4,6,8).

9. The installation according to any of claims 1 to 7 wherein at least one flow channel (32,34,36;130,132) connects the inlet (2;102) to a single outlet (4,6,8;104,106).

10. The installation according to any of claims 1 to 7 wherein at least one flow channel (32,34,36;130) connects the inlet (2;102) to two outlets (4,6,8;104,106).

11. The installation according to any preceding claim wherein relative axial movement of the tubular members (10,12) is accommodated by a flexible or telescopic connection to an outlet (6,8) associated with the movable member (12).

12. The installation according to any of claims 1 to 10 wherein relative axial movement of the tubular members (10,12) is accommodated by repositioning an outlet fitting associated with the movable member (12).

13. The installation according to any preceding claim wherein the inlet (2;102) is connectable to a source of temperature controlled water and the outlets (4,6,8;104,106) supply water to an appliance selected from a shower, bath, or washbasin.

14. A flow diverter device used in an ablutionary installation for washing, showering and bathing, the flow diverter device having an inlet (2;102) and a plurality of outlets (4,6,8;104,106) and diverter means (10,12;110,112) for controlling fluid flow between the inlet (2;102) and the outlets (4,6,8;104,106), the diverter means including an inner tubular member (10;110) and an outer tubular member (12;112) movable relative to each other in an axial direction to connect the inlet (2; 102) to a selected outlet (4,6,8;104,106) **characterised in that** the outer tubular member (12;112) defines with the inner tubular member (10;110) a series of fluid flow channels (30,32,34,36;130,132) for selectively communicating with the fluid inlet (2; 102) according to the relative axial positions of the inner and outer tubular members (10,12;110,112) to divert fluid flow from the inlet (2;102) to an individual fluid outlet (4,6,8;104,106) or a combination of at least two fluid outlets (4,6,8;104,106) via a selected fluid flow channel (30,32,34,36;130,132)

15. A method of adding one or more outlets to an ablutionary installation having a fluid source and at least one fluid outlet by connecting a flow diverter device according to claim 14 between the fluid source and the at least one fluid outlet.

## Patentansprüche

1. Eine Waschungsinstallation zum Waschen, Duschen und Baden, wobei die Installation ein Fluidzufuhrsystem mit einem Einlass (2; 102) und zumindest zwei Auslässen (4, 6, 8; 104, 106) sowie einem Umleiter (10, 12; 110, 112) zur Kontrolle des Fluidstroms zwischen dem Einlass (2; 102) und den Auslässen (4, 6, 8; 104, 106) aufweist, wobei der Umleiter ein inneres, röhrenförmiges Element (10; 110) und ein äußeres, röhrenförmiges Element (12; 112) aufweist, die relativ zueinander in axialer Richtung verschiebbar sind, um den Einlass (2; 102) an einen gewählten Auslass (4, 6, 8; 104, 106) anzuschließen, **dadurch gekennzeichnet, dass** das äußere, röhrenförmige Element (12; 112) mit dem inneren, röhrenförmigen Element (10; 110) eine Reihe von Fluidfließkanälen (30, 32, 34, 36; 130, 132) definiert, um selektiv mit dem Einlass (2; 102) entsprechend der relativen axialen Position der inneren und äußeren, röhrenförmigen Elemente (10, 12; 110, 112) in Kommunikation zu treten, um den Fluidstrom vom Einlass (2; 102) zu einem individuellen Fluidauslass (4, 6, 8; 104, 106) oder einer Kombination von zumindest zwei Fluidauslässen (4, 6, 8; 104, 106) über einen gewählten Fluidfließkanal (30, 32, 34, 36; 130, 132) umzuleiten.

2. Die Installation entsprechend Anspruch 1, wobei die röhrenförmigen Elemente (10, 12; 110, 112) konzentrisch angeordnet sind.

3. Die Installation entsprechend Anspruch 1 oder Anspruch 2, wobei das innere, röhrenförmige Element (10; 110) befestigt ist und das äußere, röhrenförmige Element (12; 112) relativ zum befestigten, röhrenförmigen Element (10; 110) in axialer Richtung verschiebbar ist.

4. Die Installation entsprechend einem der vorhergehenden Ansprüche, wobei der Einlass (2; 102) durch das innere, röhrenförmige Element (10; 110) bereitgestellt wird.

5. Die Installation entsprechend Anspruch 4, wobei zumindest ein Auslass (4) durch das innere, röhrenförmige Element (10) bereitgestellt wird und zumindest ein weiterer Auslass (6, 8) durch das äußerer, röhrenförmige Element (12) bereitgestellt wird.

6. Die Installation entsprechend Anspruch 4, wobei alle Auslässe (104, 106) durch das innere, röhrenförmige Element (110) bereitgestellt werden.

7. Die Installation entsprechend einem der vorhergehenden Ansprüche, wobei ein oder mehrere Löcher (16, 18; 116, 118a, 118b) in der Wand des inneren, röhrenförmigen Elements (10; 110) vorgesehen ist(sind, damit Fluid vom Einlass (2; 102) zu einem Fließkanal (30, 32, 34, 36; 130, 132) fließen kann, der auf das/die Loch/Löcher (16, 18; 116, 118a, 118b) ausgerichtet ist.

8. Die Installation entsprechend einem der vorhergehenden Ansprüche, wobei zumindest ein Fließkanal (30, 36) den Einlass (2) von allen Auslässen (4, 6, 8) isoliert.

9. Die Installation entsprechend einem der Ansprüche 1 bis 7, wobei zumindest ein Fließkanal (32, 34, 36; 130, 132) den Einlass (2; 102) an einen einzelnen Auslass (4, 6, 8; 104, 106) anschließt.

10. Die Installation entsprechend einem der Ansprüche 1 bis 7, wobei zumindest ein Fließkanal (32, 34, 36; 130) den Einlass (2; 102) an zwei Auslässe (4, 6, 8; 104, 106) anschließt.

11. Die Installation entsprechend einem der vorhergehenden Ansprüche, wobei relative, axiale Verschiebung der röhrenförmigen Elemente (10, 12) durch einen flexiblen oder teleskopischen Anschluss an einen Auslass (6,8), der mit dem verschiebbaren Element (12) assoziiert ist, ermöglicht wird.

12. Die Installation entsprechend einem der Ansprüche 1 bis 10, wobei die relative, axiale Verschiebung der röhrenförmigen Elemente (10, 12) durch Neupositionieren einer Auslassbefestigung, die mit dem verschiebbaren Element (12) assoziiert ist, ermöglicht wird.

13. Die Installation entsprechend einem der vorhergehenden Ansprüche, wobei der Einlass (2; 102) an eine Quelle von temperaturkontrolliertem Wasser angeschlossen werden kann und die Auslässe (4, 6, 8; 104, 106) Wasser einem Gerät zuführen, das von folgenden ausgewählt wird, nämlich Dusche, Bad oder Waschbecken.

14. Ein Durchflussumleiter, der in einer Waschungsinstallation zum Waschen, Duschen und Baden verwendet wird, wobei der Durchflussumleiter einen Einlass (2; 102) und eine Reihe von Auslässen (4, 6, 8; 104, 106) sowie einem Umleiter (10, 12,; 110, 112) zur Kontrolle des Fluidstroms zwischen dem Einlass (2; 102) und den Auslässen (4, 6, 8; 104, 106) aufweist, wobei der Umleiter ein inneres, röhrenförmiges Element (10; 110) und ein äußeres, röhrenförmiges Element (12; 112) aufweist, die relativ zueinander in axialer Richtung verschiebbar sind, um den Einlass (2; 102) an einen gewählten Auslass (4, 6, 8; 104, 106) anzuschließen, **dadurch gekennzeichnet, dass** das äußere, röhrenförmige Element (12; 112) mit dem inneren, röhrenförmigen Element (10; 110) eine Reihe von Fluidfließkanälen (30, 32, 34, 36; 130, 132) definiert, um selektiv mit dem Einlass (2; 102) entsprechend der relativen axialen Position der inneren und äußeren, röhrenförmigen Elemente (10, 12; 110, 112) in Kommunikation zu treten, um den Fluidstrom vom Einlass (2; 102) zu einem individuellen Fluidauslass (4, 6, 8; 104, 106) oder einer Kombination von zumindest zwei Fluidauslässen (4, 6, 8; 104, 106) über einen gewählten Fluidfließkanal (30, 32, 34, 36; 130, 132) umzuleiten.

15. Ein Verfahren zum Hinzufügen von einem oder mehreren Auslässen an eine Waschungsinstallation mit einer Fluidquelle und zumindest einem Fluidauslass durch Anschließen eines Durchflussumleiters entsprechend Anspruch 14 zwischen der Fluidquelle und dem zumindest einen Fluidauslass.

## Revendications

1. Une installation d'ablutions pour le lavage, la douche et le bain, l'installation possédant un système de distribution de fluide avec une admission (2;102) et au moins deux sorties (4,6,8;104,106), et un moyen de déviation (10,12;110,112) destiné à commander l'écoulement de fluide entre l'admission (2;102) et les sorties (4,6,8;104,106), le moyen de déviation comprenant un élément tubulaire interne (10;110) et un élément tubulaire externe (12;112), qui sont déplaçables l'un par rapport à l'autre dans une direction axiale de façon à raccorder l'admission (2;102) à une sortie sélectionnée (4,6,8;104,106), **caractérisé en ce que** l'élément tubulaire externe (12;112) définit avec l'élément tubulaire interne (10;110) une série de canaux d'écoulement de fluide (30,32,34,36;130,132) destinés à communiquer de manière sélective avec l'admission (2;102) en fonction des positions axiales relatives des éléments tubulaires interne et externe (10,12;110,112) de façon à dévier l'écoulement de fluide de l'admission (2;102) vers une sortie de fluide individuelle (4,6,8;104,106) ou une combinaison d'au moins deux sorties de fluide (4,6,8;104,106) par l'intermédiaire d'un canal d'écoulement de fluide sélectionné (30,32,34,36;130,132).

2. L'installation selon la Revendication 1 où les éléments tubulaires (10,12;110,112) sont agencés de manière concentrique.

3. L'installation selon la Revendication 1 ou 2 où l'élément tubulaire interne (10;110) est fixe et l'élément tubulaire externe (12; 112) est déplaçable par rapport à l'élément tubulaire fixe (10;110) dans la direction axiale.

4. L'installation selon l'une quelconque des Revendications précédentes où l'admission (2;102) est fournie par l'élément tubulaire interne (10;110').

5. L'installation selon la Revendication 4 où au moins une sortie (4) est fournie par l'élément tubulaire interne (10) et au moins une autre sortie (6,8) est fournie par l'élément tubulaire externe (12).

6. L'installation selon la Revendication 4 où toutes les sorties (104,106) sont fournies par l'élément tubulaire interne (110).

7. L'installation selon l'une quelconque des Revendications précédentes où un ou plusieurs orifices (16,18,116,118a,118b) sont fournis dans la paroi de l'élément tubulaire interne (10;110) afin de permettre à un fluide de s'écouler de l'admission (2;102) vers un canal d'écoulement (30,32,34,36;130,132) aligné avec le(s) orifice(s) (16,18,116,118a,118b).

8. L'installation selon l'une quelconque des Revendications précédentes où au moins un canal d'écoulement (30,36) isole l'admission (2) de toutes les sorties (4,6,8).

9. L'installation selon l'une quelconque des Revendications 1 à 7 où au moins un canal d'écoulement (32,34,36;130,132) raccorde l'admission (2;102) à une sortie unique (4,6,8;104,106).

10. L'installation selon l'une quelconque des Revendications 1 à 7 où au moins un canal d'écoulement (32,34,36;130) raccorde l'admission (2;102) à deux sorties (4,6,8;104,106).

11. L'installation selon l'une quelconque des Revendications précédentes où un déplacement axial relatif des éléments tubulaires (10,12) est pris en charge par un raccord flexible ou télescopique vers une sortie (6,8) associée à l'élément déplaçable (12).

12. L'installation selon l'une quelconque des Revendications 1 à 10 où un déplacement axial relatif des éléments tubulaires (10,12) est pris en charge par un repositionnement d'un raccord de sortie associé à l'élément déplaçable (12).

13. L'installation selon l'une quelconque des Revendications précédentes où l'admission (2;102) peut être raccordée à une source d'eau à température régulée et les sorties (4,6,8;104,106) fournissent de l'eau à un équipement sélectionné parmi une douche, une baignoire ou un lavabo.

14. Un dispositif déviateur d'écoulement utilisé dans une installation d'ablutions pour le lavage, la douche et le bain, le dispositif déviateur d'écoulement possédant une admission (2;102) et une pluralité de sorties (4,6,8;104,106) et un moyen de déviation (10,12;110,112) destiné à commander l'écoulement de fluide entre l'admission (2;102) et les sorties (4,6,8;104,106), le moyen de déviation comprenant un élément tubulaire interne (10;110) et un élément tubulaire externe (12;112) déplaçables l'un par rapport à l'autre dans une direction axiale de façon à raccorder l'admission (2;102) à une sortie sélectionnée (4,6,8;104,106) **caractérisée en ce que** l'élément tubulaire externe (12;112) définit avec l'élément tubulaire interne (10;110) une série de canaux d'écoulement de fluide (30,32,34,36;130,132) destinés à communiquer de manière sélective avec l'admission de fluide (2;102) en fonction des positions axiales relatives des éléments tubulaires interne et externe (10,12;110,112) de façon à dévier l'écoulement de fluide de l'admission (2;102) vers une sortie de fluide individuelle (4,6,8;104,106) ou une combinaison d'au moins deux sorties de fluide (4,6,8, 104,106) par l'intermédiaire d'un canal d'écoulement de fluide sélectionné (30,32,34,36;130,132).

15. Un procédé d'ajout d'une ou plusieurs sorties à une installation d'ablutions possédant une source de fluide et au moins une sortie de fluide par la raccordement d'un dispositif déviateur d'écoulement selon la Revendication 14 entre la source de fluide et la au moins une sortie de fluide.
